# EUROPEAN PATENT SPECIFICATION

(11) **EP 2 093 935 B1**
(45) Date of publication and mention of the grant of the patent: **16.11.2011**
(21) Application number: 08800778.6
(22) Date of filing: 04.09.2008
(51) Int. Cl.: H04L 12/24, H04L 12/26

(54) **METHOD, DEVICE AND SYSTEM OF TEST ACCESS EQUIPMENT CONFIGURATION IDENTIFICATION**
VERFAHREN, VORRICHTUNG UND SYSTEM ZUR IDENTIFIKATION DER KONFIGURATION EINER TESTZUGANGSAUSRÜSTUNG
PROCÉDÉ, DISPOSITIF ET SYSTÈME D'IDENTIFICATION DE CONFIGURATION DE MATÉRIEL D'ACCÈS D'ESSAI

(30) Priority: 19.09.2007 CN 200710154171
(43) Date of publication of application: 26.08.2009
(73) Proprietor: Huawei Technologies Co., Ltd., Longgang District, Shenzhen Guangdong 518129 (CN)
(72) Inventor: FENG, Enbo, Shenzhen Guangdong 518129 (CN); TANG, Li, Shenzhen Guangdong 518129 (CN)
(74) Representative: Pfenning, Meinig & Partner GbR
(86) International application number: PCT/CN2008/072266
(87) International publication number: WO 2009/036680

(56) References cited:
- EP-A- 1 324 522
- WO-A-2006/015350
- CN-A- 1 720 706
- CN-A- 1 852 044
- CN-A- 1 968 127
- CN-A- 101 132 322
- CN-A- 101 262 371
- US-B1- 6 686 759
- US-B1- 7 131 033

## Description

### Field of the Invention

The present invention relates to test technologies, and in particular, to a method, device, and system for configuring an identifier for a test access device.

### Background of the Invention

In a telecom network, the relevant equipment needs to be tested to ensure the normal operation of the services so that faults can be diagnosed and removed in time. Taking the widely applied X Digital Subscriber Line (xDSL) access technology as an example, the subscriber line, user end equipment, and central office equipment generally need to be tested to ensure normal access of the xDSL subscribers.

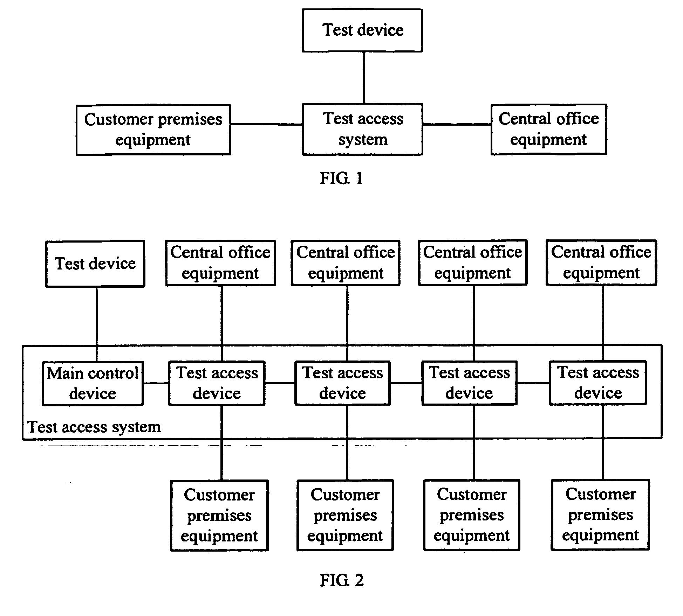

To realize testing of the equipment under test, the equipment under test and the testing device are generally connected through a test bus. Through the test bus, the testing device can test the connected equipment under test. Currently, central office equipments generally provide no test bus, and do not support automatic line capture, where automatic line capture refers to the function that the line of the tested subscriber is connected to the test device automatically. A mature solution to testing such central office equipment and relevant customer premises equipment is: The equipment under test is connected to the test device through a test access system, as shown in FIG. 1.

A test access system generally includes multiple test access devices. Multiple pieces of closely located equipment under test may be connected to the test device through the same test access device. The test access system may be networked in star, bus, or cascade mode. If the test access system is networked in cascade mode, the test access system is characterized by large capacity, wide coverage, and high extensibility. Therefore, the test access system networked in cascade mode attracts more and more attention.

FIG. 2 shows a structure of a test system in the conventional art, where the test access system includes a main control device and a test access device networked in cascade mode. One side of the main control device is connected to the test device, and the other side communicates with the lower-level test access device through a downlink cascaded port. In each test access device, an uplink cascaded port and a downlink cascaded port are configured. The uplink cascaded port communicates with its upper-level device (for example, a main control device or another test access device). The downlink cascaded port communicates with its lower-level test access device. Multiple test access devices are connected through cascaded ports in sequence to form a cascaded link. During the communication between the main control device and the test access device, the device between them needs to forward the information to implement the communication. In practice, many (scores of or hundreds of) test access devices are connected to the main control device through the cascaded link. To differentiate different test access devices on the link, a unique device identifier needs to be configured for each test access device.

In the conventional art, a solution to configuring identifiers of test access devices networked in cascade mode is: in a test access device, a hardware configuration switch group and a test access controller are configured. The hardware configuration switch group is a group of hardware switches (such as jumpers and Dual In-line Package (DIP) switches) that need to be operated manually. The continuity status of each hardware switch may be represented by a binary number. For example, "1" represents continuity of the switch, and "0" represents discontinuity of the switch. Therefore, a binary number corresponding to the continuity state of each switch in the hardware switch group may serve as a serial number of the test access controller. At the time of configuring a serial number for the test access device, the switches in the hardware configuration switch group of the device are set to the "On" state or "Off" state. The "On" state or "Off" state may correspond to the binary number "0" or "1". By reading the state of the hardware switch group, the test access controller obtains the serial number of the device. In this solution, when configuring a serial number for the test access device, an engineer needs to set the switch in the hardware configuration switch group of the device on site. If there are many test access devices in the system, the engineer needs to configure many test access devices. To differentiate each device, the engineer needs to configure many switches in the hardware configuration switch group in the device. Therefore, the workload of the engineer in configuring the serial number is huge, and the configuration is troublesome and tends to cause configuration errors. Moreover, when the hardware switch fails, the switch state read by the test access controller may be inconsistent with the actual state of the switch, and consequently, the obtained serial number of the device is incorrect.

Another solution to configuring the identifier of the test access device is provided in the conventional art. In this solution, a non-volatile memory and a test access controller are configured in the test access device. At the time of configuring a serial number for the test access device, the serial number is loaded into the non-volatile memory. When obtaining the serial number of the device, the test access controller needs to read only the serial number stored in the non-volatile memory. In this solution, when configuring a serial number for the test access device, the engineer needs to use special software and tools to load the serial number into the non-volatile memory on site, which is complicated and inefficient.
WO 2006/015350 A2 describes a cable adapter port module (CAPM) for providing test access to communication circuits associated with a digital subscriber line access multiplexer (DSLAM) which includes a first plurality of ports for coupling the CAPM to the DSLAM. The CAPM includes a second plurality of ports for coupling the CAPM to a distribution frame (DF). The CAPM includes a selector matrix circuit for switching signals between the DSLAM and the DF. The CAPM includes a controller circuit in communication with the selector matrix circuit for collecting the CAPM. The CAPM receives power signals over a communication link for powering the CAPM. The controller circuit modulates the power signal over the communication link to communicate information signals for testing the communication circuits.
EP 1 324 522 A2 describes a variable time division multiplex transmission system, which transmits information on multiple channels by using a transmission path with variable time division multiplexing. The variable time division multiplex transmission system is equipped with multiple channel devices and a single transmission path connected to these multiple channel devices. The multiple channel devices transmit or receive data over the transmission path.
Document WO 00/67140 A1 discloses a configuration manager and protocol messages, which allow the configuration manager to set device number and serial number of the receiving device.

### Summary of the Invention

The objectives of the embodiments of the present invention are to provide a method, a test access device, a main control device, and a test access system for configuring an identifier for a test access device, so that the identifiers of the test access devices are configured automatically.

The objectives are achieved through the following technical solution of the present invention:

A method for configuring an identifier for a test access device includes:
receiving an identifier configuration command sent by an upper-level device;
obtaining a device identifier carried in the identifier configuration command; and
obtaining and storing a device identifier of the test access device according to the obtained device identifier;
judging whether any lower-level test access device exists;
obtaining a second device identifier to be sent to the lower-level test access device if any lower-level test access device exists; and
sending an identifier configuration command that carries the second device identifier to the lower-level test access device.

A test access device includes:
an uplink cascaded port, adapted to communicate with an upper-level device, for example, receive an identifier configuration command sent by the upper-level device;
an identifier obtaining unit, adapted to obtain a device identifier carried in the identifier configuration command; and
an identifier configuring unit, adapted to obtain and store a device identifier of the test access device according to the obtained device identifier;
a judging unit, adapted to judge whether any lower-level test access device exists, and output an identifier determining control command if any lower-level test access device exists;
an identifier determining unit, adapted to determine the second device identifier to be sent to the lower-level test access device after receiving the identifier determining control command; and
a downlink cascaded port, adapted to communicate with the lower-level test access device, wherein the communication comprises sending an identifier configuration command to the lower-level test access device, and the identifier configuration command carries the second device identifier determined by the identifier determining unit.

A main control device includes:
an identifier configuration command generating unit, adapted to generate an identifier configuration command that carries a device identifier; and
a downlink cascaded port, adapted to communicate with a lower-level test access device, for example, send the identifier configuration command to the lower-level test access device and receiving a link change notification sent by the lower-level test access device.

A test access system includes a main control device and at least one test access device networked in cascade mode.

The main control device is adapted to communicate with a test access device, for example, send an identifier configuration command that carries a device identifier to the test access device.

The test access device is adapted to: receive the identifier configuration command sent by the upper-level device, obtain the device identifier carried in the identifier configuration command, obtain and store a device identifier of the test access device according to the obtained device identifier, judge whether any lower-level test access device exists, obtain a second device identifier to be sent to the lower-level test access device if any lower-level test access device exists, and send an identifier configuration command that carries the second device identifier to the lower-level test access device.

The foregoing technical solution shows that in the embodiments of the present invention, it is not necessary for engineers or special devices to configure the device identifiers on the site of the test access devices one by one. Instead, each test access device configures its own device identifier automatically according to the device identifier provided by the main control device. Therefore, the embodiments of the present invention implement automatic configuration of an identifier for the test access device, thus improving the configuration efficiency. Moreover, because many manual operations are avoided, the configuration errors are reduced massively.

### Brief Description of the Drawings

FIG. 1 is a block diagram of a test system in the prior art;

FIG. 2 shows a structure of a test system in the prior art;

FIG. 3 shows a structure of a test access device according to an embodiment of the present invention;

FIG. 4 shows a structure of a test access device according to another embodiment of the present invention;

FIG. 5 shows a structure of a main control device according to an embodiment of the present invention;

FIG. 6 is a flowchart of a method for configuring an identifier for a test access device according to an embodiment of the present invention;

FIG. 7 is a flowchart of a method for configuring an identifier for a test access device according to another embodiment of the present invention;

FIG. 8 is a flowchart of a method for configuring an identifier for a test access device according to another embodiment of the present invention; and

FIG. 9 is a flowchart of a method for configuring an identifier for a test access device according to another embodiment of the present invention.

### Detailed Description of the Embodiments

The method, device and system for configuring an identifier for a test access device according to the embodiments of the present invention are detailed below with reference to accompanying drawings.

First, the test access system under the embodiment of the present invention is described below. A test access system provided in an embodiment of the present invention includes a main control device and at least one test access device networked in cascade mode:
the main control device is adapted to communicate with the lower-level test access device, for example, send an identifier configuration command that carries a device identifier to the lower-level test access device; and
the test access device is adapted to: receive the identifier configuration command sent by the upper-level device, obtain the device identifier carried in the identifier configuration command, and obtain and store a device identifier of the test access device according to the obtained device identifier.

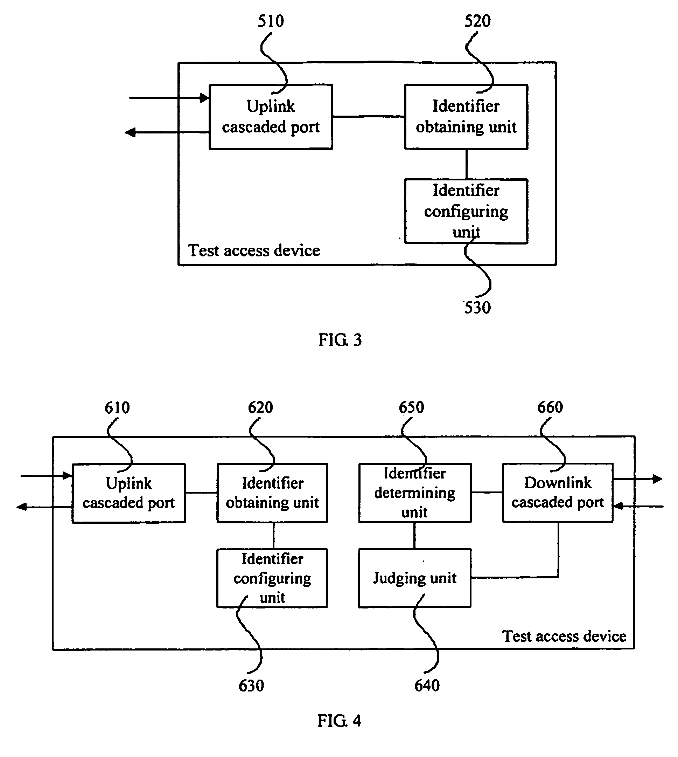

FIG. 3 shows a structure of a test access device provided in an embodiment of the present invention. As shown in FIG. 3, the test access device includes an uplink cascaded port 510, an identifier obtaining unit 520, an identifier configuring unit 530:
the uplink cascaded port 510, adapted to communicate with an upper-level device, for example, receive an identifier configuration command sent by the upper-level device;
the identifier obtaining unit 520, adapted to obtain a device identifier carried in the identifier configuration command; and
the identifier configuring unit 530, adapted to obtain and store a device identifier of the test access device according to the obtained device identifier.

FIG. 4 shows a structure of a test access device provided in a second embodiment of the present invention. As shown in FIG. 4, the test access device may include an uplink cascaded port 610, an identifier obtaining unit 620, an identifier configuring unit 630, a judging unit 640, an identifier determining unit 650:
the uplink cascaded port 610, adapted to communicate with an upper-level device, for example, receive an identifier configuration command sent by the upper-level device;
the identifier obtaining unit 620, adapted to obtain a device identifier carried in the identifier configuration command;
the identifier configuring unit 630, adapted to obtain and store a device identifier of the test access device according to the obtained device identifier;
the judging unit 640, adapted to: judge whether any lower-level test access device exists, and output an identifier determining control command if any lower-level test access device exists;
the identifier determining unit 650, adapted to determine a device identifier to be sent to the lower-level test access device after receiving the identifier determining control command; and
the downlink cascaded port 660, adapted to communicate with the cascaded lower-level test access device, for example, send an identifier configuration command to the lower-level test access device, where the command carries the device identifier determined by the identifier determining unit 650.

The communication between the downlink cascaded port 660 and the lower-level test access device further includes: receiving the information sent by the lower-level test access device.

The process in which the judging unit 640 judges whether any lower-level test access device exists may be: judging whether the downlink cascaded port 660 receives the expected information; if the downlink cascaded port 660 receives the expected information, determining that a lower-level test access device exists; otherwise, determining that no lower-level test access device exists.

In more embodiments of the test access device under the present invention, the communication between the uplink cascaded port 610 and the upper-level device further includes: sending a link change notification to the upper-level device, where the link change notification may indicate addition of a new device or indicate removal of an existing device.

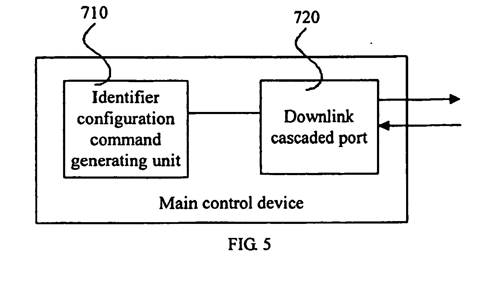

FIG. 5 shows a structure of a main control device in an embodiment of the present invention. As shown in FIG. 5, the main control device includes an identifier configuration command generating unit 710, a downlink cascaded port 720:
the identifier configuration command generating unit 710, adapted to generate an identifier configuration command that carries a device identifier; and
the downlink cascaded port 720, adapted to communicate with a cascaded lower-level test access device, for example, send the identifier configuration command to the lower-level test access device when preset conditions are met.

In more embodiments of the main control device under the present invention, the communication between the downlink cascaded port 720 and the lower-level test access device further includes: receiving a link change notification from the lower-level test access device, where the link change notification may indicate addition of a new device or indicate removal of an existing device.

In more embodiments of the test access system under the present invention, the main control device may have the features of the main control device in any embodiment of the main control device under the present invention, and the test access device may have the features of the test access device in any embodiment of the test access device under the present invention.

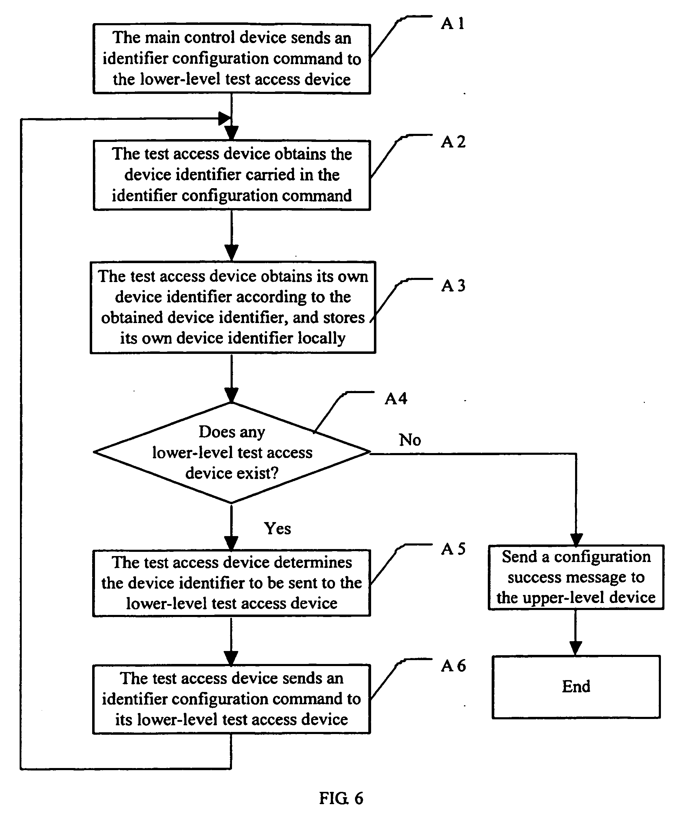

A first embodiment of the method for configuring an identifier for a test access device under the present invention is described below. Through this embodiment, the serial numbers of all test access devices in the whole cascaded link may be configured automatically. FIG. 6 is a flowchart of the method for configuring an identifier for a test access device in an embodiment of the present invention. The configuration process includes the following steps:

A1. The main control device sends an identifier configuration command to the lower-level test access-device. The identifier configuration command carries a device identifier and an indication of configuring all test access devices in the whole link.

The device identifier may be a device identifier configured by the main control device for the adjacent lower-level test access device, or a preset default device identifier. The adjacent lower-level test access device processes this device identifier specifically to obtain the device identifier of the lower-level test access device.

A2. The test access device resolves the received identifier configuration command, and obtains the device identifier in the command.

In this embodiment, the device identifier of each test access device may be a digital sequence or a character sequence.

A3. The test access device obtains its own device identifier according to the obtained device identifier, and stores its own device identifier locally.

The device identifier of the test access device is obtained primarily according to the presetting of the test access device.

When the test access device mentioned in this step is a test access device adjacent to the main control device (in this case, the upper-level device is the main control device), if the obtained device identifier is a device identifier configured by the main control device for the test access device, the device identifier of the test access device is the obtained device identifier. If the obtained device identifier is a default device identifier preset by the main control device, the device identifier of the test access device is generated after the obtained device identifier is processed specifically.

When the test access device mentioned in this step is not a test access device adjacent to the main control device (in this case, the upper-level device is another test access device), if the obtained device identifier is a device identifier configured by the upper-level test access device for the current test access device, the device identifier of the current test access device is the obtained device identifier. If the obtained device identifier is the device identifier of the upper-level test access device, the device identifier of the current test access device is generated after the obtained device identifier is processed specifically.

For example, the specific processing of the device identifier is to sum up the obtained digital serial number corresponding to the obtain device identifier and the step length of change if the device identifier of the test access device is a digital serial number. The step length of change may be a positive integer or a negative integer, and its value may be selected as required.

A4. The test access device judges whether any lower-level test access device exists; if any lower-level test access device exists, the process proceeds to A5; if no lower-level test access device exists, the process is ended.

The test access device may judge whether any cascaded lower-level test access device exists by checking whether the downlink cascaded port receives the expected information; if the downlink cascaded port receives the expected information, it is determined that a lower-level test access device exists; otherwise, it is determined that no lower-level test access device exists. Two specific judgment methods are given below:

I. A special signal input port is configured in the downlink cascaded port of each test access device in the link, a special signal output port is configured in the uplink cascaded port, and the signal output port of each test access device is set to output preset signals periodically. The test access device detects the special signal input port. If the port receives an expected signal, it is determined that a lower-level test access device exists; otherwise, it is determined that no lower-level test access device exists.

II. The test access device outputs a preset query command through the downlink cascaded port directly. If the downlink cascaded port receives expected response information within a preset period, it is determined that a lower-level test access device exists; otherwise, it is determined that no lower-level test access device exists.

A5. The test access device determines the device identifier to be sent to the lower-level test access device according to the obtained device identifier of the test access device.

The device identifier to be sent to the lower-level test access device may be the device identifier of the test access device itself, or the device identifier configured for the lower-level test access device, and is determined primarily according to the presetting of the test access device.

The device identifier configured for the lower-level test access device may derive from specific processing of the device identifier of the test access device itself. For example, the specific processing of the device identifier is to sum up the obtained digital serial number of the test access device itself and the step length of change if the device identifier of the test access device is a digital serial number.

A6. The test access device sends an identifier configuration command to its lower-level test access device, where the command carries the determined device identifier. The process returns to A2.

In the foregoing embodiment, the step length of change may be sent to each test access device through the identifier configuration command, or preset in the test access device.

In the foregoing embodiments, it is not necessary for engineers to configure the device identifiers on the site of the test access devices one by one. Instead, each test access device configures its own device identifier automatically according to the device identifier provided by the upper-level device. Therefore, the embodiments of the present invention implement automatic configuration of an identifier for the test access device, thus improving the configuration efficiency. Moreover, many manual operations are avoided, thus reducing configuration errors.

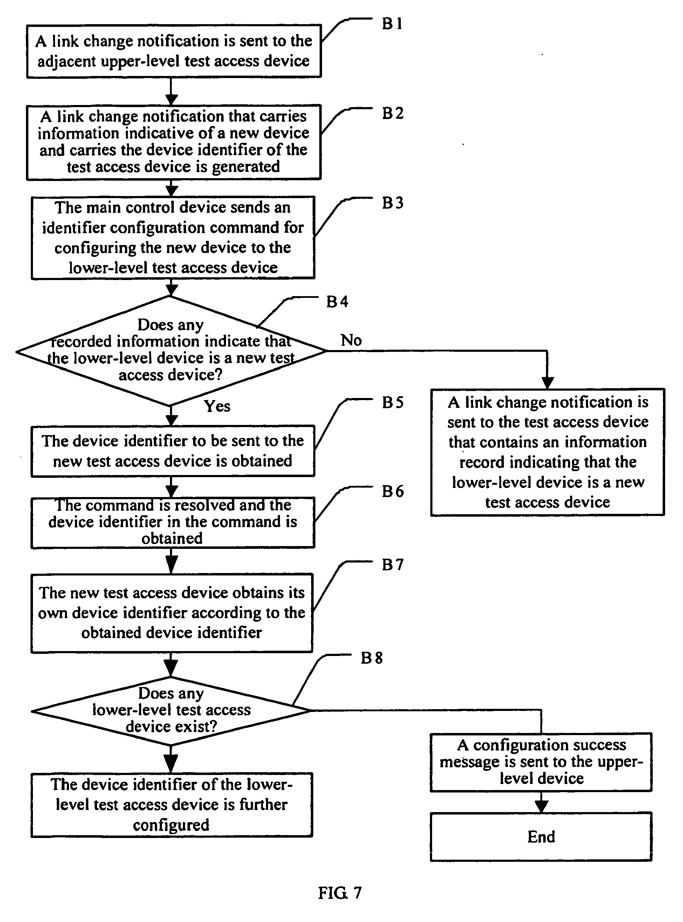

A second embodiment of the method for configuring an identifier for a test access device under the present invention is described below: Through this embodiment, the identifier of the test access device newly added to the cascaded link may be configured automatically. In this process, the configuration is performed for the newly added test access device and all the lower-level test access devices. FIG. 7 is a flowchart of a method for configuring an identifier for a test access device in another embodiment of the present invention. As shown in FIG. 7, the configuration process includes the following steps:

B1. When a new test access device is added to an existing cascaded link, a link change notification is sent to the adjacent upper-level test access device, where the notification carries the information indicative of the new device.

For ease of description, in this embodiment, the upper-level test access device relative to the new test access device is called "upper level-1 device relative to the new test access device", and is abbreviated to "upper level-1 device"; the upper-level device adjacent to the upper level-1 device is called "upper level-2 device relative to the new test access device", and is abbreviated to "upper level-2 device", and so on.

The link change notification may be an identifier configuration request.

B2. The upper level-1 device receives the link change notification, generates a link change notification that carries the information indicative of the new device and carries its own device identifier, sends the link change notification to the main control device through a cascaded link; and at the same time, records the information that its lower-level device is a new test access device.

After generating the link change notification, the upper level-1 device sends the notification to the upper level-2 device.

If the upper level-2 device is a main control device, the process proceeds to B3; otherwise, the received link change notification is forwarded to the upper level-3 device. The forwarding of the link change notification goes on until the notification arrives at the main control device.

B3. The main control device receives the link change notification, and sends an identifier configuration command to its lower-level test access device according to the information indicative of the new device in the notification. The command is intended to configure an identifier for the new device and carries the device identifier in the link change notification.

For ease of description, in this embodiment, the lower-level device adjacent to the main control device is called "lower level-1 device relative to the main control device", and is abbreviated to "lower level-1 device"; the lower-level device adjacent to the lower level-1 device is called "lower level-2 device relative to the main control device", and is abbreviated to "lower level-2 device", and so on.

B4. After receiving the identifier configuration command, the lower level-1 device judges whether any recorded information indicates that its lower-level device is a new test access device. If such information exists, the process proceeds to B5; otherwise, the lower level-1 device sends the identifier configuration command through a cascaded link to the test access device that records the foregoing information (namely, the upper level-1 device relative to the new test access device).

If the lower level-1 device contains no information record indicating that its lower-level device is a new test access device, the lower level-1 device sends the received identifier configuration command to the lower level-2 device.

After receiving the identifier configuration command, the lower level-2 device judges whether any recorded information indicates that its lower-level device is a new test access device. If such information exists, the process proceeds to B5; otherwise, the lower level-2 device sends the received identifier configuration command to the lower level-3 device. The sending goes on until the link change notification arrives at the test access device that contains an information record indicating that its lower-level device is a new test access device.

B5. The test access device that contains the information record indicating that its lower-level device is a new test access device (hereinafter referred to as "test access device with the information record") obtains the device identifier to be sent to the new test access device according to its own device identifier, generates an identifier configuration command, and then sends the command to the new test access device, where the command carries the obtained device identifier.

The device identifier to be sent to the new test access device may be a device identifier of the test access device with the information record, or a device identifier configured for the new test access device, and is determined primarily according to the presetting of the test access device.

The device identifier configured for the new test access device may derive from specific processing of the device identifier of the test access device with the information record. For example, the specific processing of the device identifier is to sum up the digital serial number of the test access device with the information record and the step length of change if the device identifier of the test access device with the information record is a digital serial number.

B6. The new test access device receives the identifier configuration command, resolves the command, and obtains the device identifier in the command.

B7. The new test access device obtains its own device identifier according to the obtained device identifier, and stores its own device identifier locally. The device identifier of the new test access device is obtained primarily according to the presetting of the test access device.

If the obtained device identifier is a device identifier configured by the upper-level test access device for the test access device, the device identifier of the test access device is the obtained device identifier; if the obtained device identifier is a device identifier of the upper-level test access device, the identifier of the test access device is derived from specific processing of the obtained device identifier.

For example, the specific processing of the device identifier is to sum up the obtained digital serial number of the device and the step length of change if the device identifier of the test access device is a digital serial number. The step length of change may be a positive integer or a negative integer, and its value may be selected as required.

B8. The new test access device judges whether any lower-level test access device exists. If any lower-level test access device exists, the process of configuring the device identifier of the lower-level test access device is started; otherwise, a configuration success message is sent to the upper-level device, and the process is ended.

The new test access device may judge whether any lower-level test access device exists with reference to step A4 of the first method embodiment of the present invention.

In the subsequent configuration of the device identifier for the lower-level test access device, the new test access device may serve as an ordinary test access device. The configuration may be implemented with reference to the first method embodiment of the present invention.

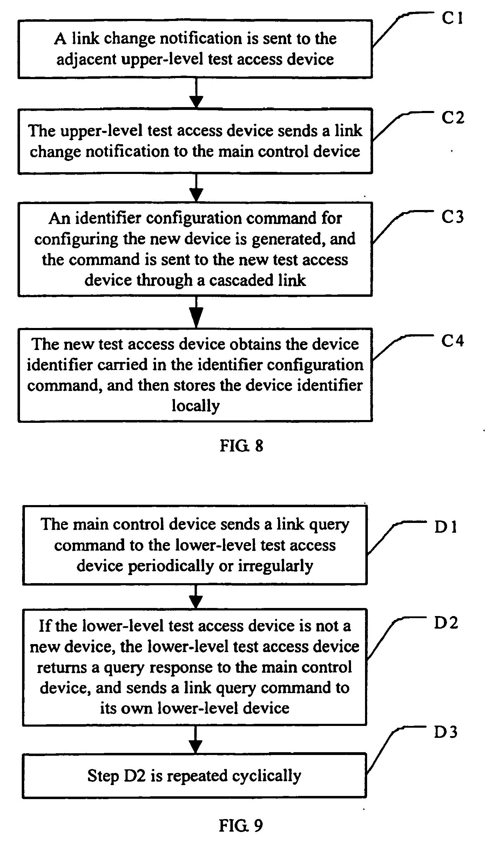

A third embodiment of the method for configuring an identifier for a test access device under the present invention is described below. In this embodiment, when a new test access device is added to the cascaded link, only the device identifier of the new test access device is configured. FIG. 8 is a flowchart of a method for configuring an identifier for a test access device in another embodiment of the present invention. As shown in FIG. 8, the method includes the following steps:

C1. When a new test access device is added to an existing cascaded link, a link change notification is sent to the adjacent upper-level test access device, where the notification carries the information indicative of the new device.

C2. The upper-level test access device sends the received link change notification to the main control device through the cascaded link.

C3. The main control device receives the link change notification, generates an identifier configuration command for configuring an identifier for the new device according to the information indicative of the new device in the notification, and sends the command to the new test access device through the cascaded link. The identifier configuration command carries the device identifier in the link change notification and the device identifier configured for the new test access device.

The main control device may configure a device identifier different from any recorded device identifier of test access devices for the new test access device according to the recorded device identifiers of test access devices in the cascaded link. That is, the device identifier configured for the new test access device is appropriate only if it is unique in the link.

C4. The new test access device receives the identifier configuration command, resolves the command, obtains the device identifier in the command, and stores the device identifier locally.

In more embodiments of the method for configuring an identifier for a test access device under the present invention, the main control device may start the process of reconfiguring all the devices in the link directly upon receiving the link change notification indicative of a new device. The reconfiguration may be implemented with reference to the first method embodiment of the present invention.

In more embodiments of the method for configuring an identifier for a test access device under the present invention, the main control device may query the state of the cascaded link actively, and start the process of configuring the identifier for the new test access device if any new test access device is found. FIG. 9 is a flowchart of a method for configuring an identifier for a test access device in another embodiment of the present invention. As shown in FIG. 9, the query process includes the following steps:

D1. The main control device may send a link query command to the lower-level test access device periodically or irregularly according to preset rules.

D2. If the lower-level test access device (namely, lower level-1 device) is not a new test access device, the lower level-1 device returns an expected query response to the main control device, and at the same time, sends a link query command to its own lower-level test access device (namely, lower level-2 device). If the lower level-1 device is a new test access device, it is impossible to return the expected response to the main control device.

D3. The lower level-2 device receives the link query command. If the lower level-2 device is not a new test access device, the lower level-2 device returns an expected query response carrying a device identifier to the lower level-1 device, and at the same time, sends a link query command to its own lower-level test access device (namely, lower level-3 device). If the lower level-2 device is a new test access device, it is impossible to return the expected response to the lower level-1 device.

The lower level-1 device may judge whether the expected query response is received from the lower level-2 device within the preset period. If the expected query response is received within the preset period, it is determined that the lower level-2 device is not a new test access device, and the query response is sent to the main control device. If the expected query response is not received within the preset period, it is determined that the level-2 test access device is a new test access device, and the lower level-1 device generates a link change notification that carries information indicative of the new device and carries its own device identifier, sends the link change notification to the main control device, and at the same time, records the information that the lower-level device is a new test access device.

Other test access devices in the cascaded link may perform the operations similar to the operations of the lower level-2 device described in D3 until the whole query process is completed.

If the main control device receives the link change notification (in the case that the new test access device is not the lower level-1 device) or receives no expected response within the preset period (in the case that the new test access device is the lower level-1 device), it is determined that a new test access device exists in the cascaded link, and the process of configuring the device identifier is started. If the main control device receives the query responses returned by all known test access devices and receives no link change notification, it is determined that no new test access device exists in the cascaded link.

In more embodiments of the method for configuring an identifier for a test access device under the present invention, when a test access device is removed from the cascaded link, the main control device receives a link change notification indicating removal of the test access device. The main control device may delete the record of the removed device from the recorded device identifiers of the test access devices in the corresponding cascaded link.

It is understandable to those skilled in the art that all or part of the steps in the foregoing embodiments may be implemented by hardware instructed by a program. The program may be stored in a computer-readable storage medium. When being executed, the program may perform these steps: receiving an identifier configuration command sent by the upper-level device; obtaining the device identifier carried in the identifier configuration command; obtaining its own device identifier according to the device identifier; and storing its own device identifier locally. The storage medium may be a Read-Only Memory or Random Access Memory (ROM/RAM), a magnetic disk, a compact disk, and so on.

To sum up, in the embodiments of the present invention, it is not necessary for engineers to configure the device identifiers on the site of the test access devices. Instead, each test access device configures its own device identifier automatically according to the device identifier provided by the upper-level device. Therefore, the embodiments of the present invention implement automatic configuration of an identifier for the test access device, thus improving the configuration efficiency. Moreover, because many manual operations are avoided, the configuration errors are reduced massively.

Detailed above are a method, a test access device, a main control device, and a test access system for configuring an identifier for a test access device according to the embodiments of the present invention. Although the invention is described through some exemplary embodiments, the invention is not limited to such embodiments. It is apparent that those skilled in the art can make various modifications and variations to the invention without departing from the scope of the invention. The invention is intended to cover the modifications and variations provided that they fall in the scope of protection defined by the following claims.

## Claims

1. A method for configuring an identifier for a test access device, comprising:
receiving (A1) an identifier configuration command sent by an upper-level device;
obtaining (A2) a first device identifier carried in the identifier configuration command; and
obtaining (A3) and storing a device identifier of the test access device according to the first device identifier; judging (A4) whether any lower-level test access device exists;
obtaining (A5) a second device identifier to be sent to the lower-level test access device if any lower-level test access device exists; and
sending (A6) an identifier configuration command that carries the second device identifier to the lower-level test access device.

2. The method of claim 1, wherein the judging whether any lower-level test access device exists comprises:
detecting whether a downlink cascaded port receives expected information; and
determining that the lower-level test access device exists if the downlink cascaded port receives the expected information.

3. The method of claim 1, wherein the obtaining the second device identifier to be sent to the lower-level test access device comprises:
determining the obtained device identifier of the test access device as the second device identifier to be sent to the lower-level test access device directly; or
processing the obtained device identifier of the test access device specifically to obtain the second device identifier to be sent to the lower-level test access device.

4. The method of any one of claims 1-3, wherein the obtaining the device identifier of the test access device according to the first device identifier comprises:
determining the first device identifier as the device identifier of the test access device directly; or
processing the first device identifier specifically to obtain the device identifier of the test access device.

5. The method of claim 4, further comprising:
sending a link change notification indicative of a new device to a main control device actively when a new test access device is added to a link; or
sending a link change notification indicative of a new device to a main control device actively after finding that the new test access device exists in the link according to a link query command sent by the main control device.

6. A method for configuring an identifier for a test access device, comprising:
receiving, by a main control device, a link change notification indicative of a new device from the test access device;
generating, by the main control device in a test access system, an identifier configuration command carrying a first device identifier, wherein the first device identifier is used to determine a device identifier of the test access device by the test access device ;
sending the identifier configuration command to the test access device in the test access system.

7. A test access device, comprising:
an uplink cascaded port (510), adapted to communicate with an upper-level device, receive an identifier configuration command sent by the upper-level device;
an identifier obtaining unit (520), adapted to obtain a first device identifier carried in the identifier configuration command; and
an identifier configuring unit (530), adapted to obtain and store a device identifier of the test access device according to the first device identifier;
a judging unit(640), adapted to judge whether any lower-level test access device exists, and output an identifier determining control command if any lower-level test access device exists;
an identifier determining unit (650), adapted to determine the second device identifier to be sent to the lower-level test access device after receiving the identifier determining control command; and
a downlink cascaded port (660), adapted to communicate with the lower-level test access device, wherein the communication comprises sending an identifier configuration command to the lower-level test access device, and the identifier configuration command carries the second device identifier determined by the identifier determining unit.

8. The test access device of claim 7, wherein:
the communication between the downlink cascaded port (660) and the lower-level test access device further comprises: receiving information sent by the lower-level test access device; and
the judging unit (640) is further adapted to judge whether the downlink cascaded port receives expected information; determine that the lower-level test access device exists if the downlink cascaded port receives expected information, or determine that no lower-level test access device exists if the downlink cascaded port does not receive expected information.

9. A main control device, comprising:
an identifier configuration command generating unit (710), adapted to generate an identifier configuration command that carries a device identifier; and
a downlink cascaded port (720), adapted to communicate with a lower-level test access device, wherein the communication comprises sending the identifier configuration command to the lower-level test access device and receiving a link change notification sent by the lower-level test access device.

10. A test access system, comprising a main control device and at least one test access device networked in cascade mode, wherein:
the main control device is adapted to communicate with a test access device, wherein the communication comprises sending an identifier configuration command that carries a device identifier to the test access device; and
the test access device is adapted to receive the identifier configuration command sent by an upper-level device, obtain the first device identifier carried in the identifier configuration command, obtain and store a device identifier of the test access device according to the first device identifier, judge whether any lower-level test access device exists, obtain a second device identifier to be sent to the lower-level test access device if any lower-level test access device exists, and send an identifier configuration command that carries the second device identifier to the lower-level test access device.

11. A computer-readable storage medium, wherein:
the computer-readable storage medium stores computer program codes which, when executed by a computer, executes all the steps of the method according to any one of claims 1-6.

## Patentansprüche

1. Verfahren zum Konfigurieren einer Kennung für eine Testzugangseinrichtung, mit den folgenden Schritten:
Empfangen (A1) eines durch eine Einrichtung der oberen Ebene gesendeten Kennungskonfigurationsbefehls;
Erhalten (A2) einer in dem Kennungskonfigurationsbefehl geführten ersten Einrichtungskennung; und
Erhalten (A3) und Speichern einer Einrichtungskennung der Testzugangseinrichtung gemäß der ersten Einrichtungskennung; Bestimmen (A4), ob irgendeine Testzugangseinrichtung der unteren Ebene existiert;
Erhalten (A5) einer zweiten Einrichtungskennung, die zu der Testzugangseinrichtung der unteren Ebene zu senden ist, wenn irgendeine Testzugangseinrichtung der unteren Ebene existiert; und
Senden (A6) eines Kennungskonfigurationsbefehls, der die zweite Einrichtungskennung führt, zu der Testzugangseinrichtung der unteren Ebene.

2. Verfahren nach Anspruch 1, wobei das Bestimmen, ob irgendeine Testzugangseinrichtung der unteren Ebene existiert, Folgendes umfasst:
Detektieren, ob ein kaskadierter Abwärtsstrecken-Port erwartete Informationen empfängt; und
Bestimmen, dass die Testzugangseinrichtung der unteren Ebene existiert, wenn der kaskadierte Abwärtsstrecken-Port die erwarteten Informationen empfängt.

3. Verfahren nach Anspruch 1, wobei das Erhalten der zweiten Einrichtungskennung, die zu der Testzugangseinrichtung der unteren Ebene zu senden ist, Folgendes umfasst:
direktes Bestimmen der erhaltenen Einrichtungskennung der Testzugangseinrichtung als die zweite Einrichtungskennung, die zu der Testzugangseinrichtung der unteren Ebene zu senden ist; oder
Verarbeiten der erhaltenen Einrichtungskennung der Testzugangseinrichtung spezifisch, um die zweite Einrichtungskennung zu erhalten, die zu der Testzugangseinrichtung der unteren Ebene zu senden ist.

4. Verfahren nach einem der Ansprüche 1-3, wobei das Erhalten der Einrichtungskennung der Testzugangseinrichtung gemäß der ersten Einrichtungskennung Folgendes umfasst:
direktes Bestimmen der ersten Einrichtungskennung als die Einrichtungskennung der Testzugangseinrichtung; oder
Verarbeiten der ersten Einrichtungskennung spezifisch, um die Einrichtungskennung der Testzugangseinrichtung zu erhalten.

5. Verfahren nach Anspruch 4, ferner mit den folgenden Schritten:
aktives Senden einer Streckenänderungsbenachrichtigung, die eine neue Einrichtung angibt, zu einer Hauptsteuereinrichtung, wenn eine neue Testzugangseinrichtung zu einer Strecke hinzugefügt wird; oder
aktives Senden einer Streckenänderungsbenachrichtigung, die eine neue Einrichtung angibt, zu einer Hauptsteuereinrichtung, nachdem gemäß einem durch die Hauptsteuereinrichtung gesendeten Streckenabfragebefehl gefunden wird, dass die neue Testzugangseinrichtung in der Strecke existiert.

6. Verfahren zum Konfigurieren einer Kennung für eine Testzugangseinrichtung, mit den folgenden Schritten:
Empfangen einer Streckenänderungsbenachrichtigung, die eine neue Einrichtung angibt, durch eine Hauptsteuereinrichtung von der Testzugangseinrichtung;
Erzeugen eines Kennungskonfigurationsbefehls, der eine erste Einrichtungskennung führt, durch die Hauptsteuereinrichtung in einem Testzugangssystem, wobei die erste Einrichtungskennung verwendet wird, um eine Einrichtungskennung der Testzugangseinrichtung durch die Testzugangseinrichtung zu bestimmen;
Senden des Kennungskonfigurationsbefehls zu der Testzugangseinrichtung in dem Testzugangssystem.

7. Testzugangseinrichtung, umfassend:
einen kaskadierten Aufwärtsstrecken-Port (510), der dafür ausgelegt ist, mit einer Einrichtung der oberen Ebene zu kommunizieren und einen durch die Einrichtung der oberen Ebene gesendeten Kennungskonfigurationsbefehl zu empfangen;
eine Kennungserhaltungseinheit (520), die dafür ausgelegt ist, eine in dem Kennungskonfigurationsbefehl geführte erste Einrichtungskennung zu erhalten; und eine Kennungskonfiguriereinheit (530), die dafür ausgelegt ist, eine Einrichtungskennung der Testzugangseinrichtung gemäß der ersten Einrichtungskennung zu erhalten und zu speichern;
eine Bestimmungseinheit (640), die dafür ausgelegt ist zu bestimmen, ob irgendeine Testzugangseinrichtung der unteren Ebene existiert, und einen Kennungsbestimmungs-Steuerbefehl auszugeben, wenn irgendeine Testzugangseinrichtung der unteren Ebene existiert;
eine Kennungsbestimmungseinheit (650), die dafür ausgelegt ist, die zu der Testzugangseinrichtung der unteren Ebene zu sendende zweite Einrichtungskennung nach dem Empfang des Kennungsbestimmungs-Steuerbefehls zu bestimmen; und
einen kaskadierten Abwärtsstrecken-Port (660), der dafür ausgelegt ist, mit der Testzugangseinrichtung der unteren Ebene zu kommunizieren, wobei die Kommunikation das Senden eines Kennungskonfigurationsbefehls zu der Testzugangseinrichtung der unteren Ebene umfasst und der Kennungskonfigurationsbefehl die durch die Kennungsbestimmungseinheit bestimmte zweite Einrichtungskennung führt.

8. Testzugangseinrichtung nach Anspruch 7, wobei:
die Kommunikation zwischen dem kaskadierten Abwärtsstrecken-Port (660) und der Testzugangseinrichtung der unteren Ebene ferner Folgendes umfasst: Empfangen von durch die Testzugangseinrichtung der unteren Ebene gesendeten Informationen; und
die Bestimmungseinheit (640) ferner dafür ausgelegt ist, zu bestimmen, ob der kaskadierte Abwärtsstrecken-Port erwartete Informationen empfängt; zu bestimmen,
dass die Testzugangseinrichtung der unteren Ebene existiert, wenn der kaskadierte Abwärtsstrecken-Port erwartete Informationen empfängt oder zu bestimmen, dass keine Testzugangseinrichtung der unteren Ebene existiert, wenn der kaskadierte Abwärtsstrecken-Port erwartete Informationen nicht empfängt.

9. Hauptsteuereinrichtung, umfassend:
eine Kennungskonfigurationsbefehlserzeugungseinheit (710), die dafür ausgelegt ist, einen Kennungskonfigurationsbefehl zu erzeugen, der eine Einrichtungskennung führt; und
einen kaskadierten Abwärtsstrecken-Port (720), der dafür ausgelegt ist, mit einer Testzugangseinrichtung der unteren Ebene zu kommunizieren, wobei die Kommunikation das Senden des Kennungskonfigurationsbefehls zu der Testzugangseinrichtung der unteren Ebene und das Empfangen einer durch die Testzugangseinrichtung der unteren Ebene gesendeten Streckenänderungsbenachrichtigung umfasst.

10. Testzugangssystem, das eine Hauptsteuereinrichtung und mindestens eine im kaskadierten Modus vernetzte Testzugangseinrichtung umfasst, wobei:
die Hauptsteuereinrichtung dafür ausgelegt ist, mit einer Testzugangseinrichtung zu kommunizieren, wobei die Kommunikation das Senden eines Kennungskonfigurationsbefehls, der eine Einrichtungskennung führt, zu der Testzugangseinrichtung umfasst; und
die Testzugangseinrichtung dafür ausgelegt ist, den durch eine Einrichtung der oberen Ebene gesendeten Kennungskonfigurationsbefehl zu empfangen, die in dem Kennungskonfigurationsbefehl geführte erste Einrichtungskennung zu erhalten, eine Einrichtungskennung der Testzugangseinrichtung gemäß der ersten Einrichtungskennung zu erhalten und zu speichern, zu bestimmen, ob irgendeine Testzugangseinrichtung der unteren Ebene existiert, eine zweite Einrichtungskennung zu erhalten, die zu der Testzugangseinrichtung der unteren Ebene zu senden ist, wenn irgendeine Testzugangseinrichtung der unteren Ebene existiert, und einen Kennungskonfigurationsbefehl, der die zweite Einrichtungskennung führt, zu der Testzugangseinrichtung der unteren Ebene zu senden.

11. Computerlesbares Speichermedium, wobei:
das computerlesbare Speichermedium Computerprogrammcodes speichert, die, wenn sie durch einen Computer ausgeführt werden, alle Schritte des Verfahrens nach einem der Ansprüche 1-6 ausführen.

## Revendications

1. Procédé de configuration d'un identifiant de dispositif d'accès de test, comprenant :
la réception (A1) d'une commande de configuration d'identifiant envoyée par un dispositif de niveau supérieur ;
l'obtention (A2) d'un premier identifiant de dispositif acheminé dans la commande de configuration d'identifiant ; et
l'obtention (A3) et la mémorisation d'un identifiant de dispositif du dispositif d'accès de test en fonction du premier identifiant de dispositif ; le fait de juger (A4) si un dispositif d'accès de test de niveau inférieur existe ou non ;
l'obtention (A5) d'un second identifiant de dispositif à envoyer au dispositif d'accès de test de niveau inférieur si un dispositif d'accès de test de niveau inférieur existe ; et
l'envoi (A6) d'une commande de configuration d'identifiant qui achemine le second identifiant de dispositif au dispositif d'accès de test de niveau inférieur.

2. Procédé selon la revendication 1, dans lequel le fait de juger si un dispositif d'accès de test de niveau inférieur existe ou non comprend :
le fait de détecter si un port monté en cascade de liaison descendante reçoit ou non les informations prévues ; et
le fait de déterminer que le dispositif d'accès de test de niveau inférieur existe si le port monté en cascade de liaison descendante reçoit les informations prévues.

3. Procédé selon la revendication 1, dans lequel l'obtention du second identifiant de dispositif à envoyer au dispositif d'accès de test de niveau inférieur comprend :
la détermination de l'identifiant de dispositif obtenu du dispositif d'accès de test comme second identifiant de dispositif à envoyer directement au dispositif d'accès de test de niveau inférieur ; ou
le traitement de l'identifiant de dispositif obtenu du dispositif d'accès de test spécifiquement pour obtenir le second identifiant de dispositif à envoyer au dispositif d'accès de test de niveau inférieur.

4. Procédé selon l'une quelconque des revendications 1 à 3, dans lequel l'obtention de l'identifiant de dispositif du dispositif d'accès de test en fonction du premier identifiant de dispositif comprend :
la détermination du premier identifiant de service comme l'identifiant de dispositif du dispositif d'accès de test directement ; ou
le traitement du premier identifiant de dispositif spécifiquement pour obtenir l'identifiant de dispositif du dispositif d'accès de test.

5. Procédé selon la revendication 4, comprenant en outre:
l'envoi d'une notification de changement de liaison indiquant un nouveau dispositif à un dispositif de commande principal activement quand un nouveau dispositif d'accès de test est ajouté à une liaison ; ou
l'envoi d'une notification de changement de liaison indiquant un nouveau dispositif à un dispositif de commande principal après avoir déterminé que le nouveau dispositif d'accès de test existe dans la liaison en fonction d'une commande d'interrogation de liaison envoyée par le dispositif de commande principal.

6. Procédé de configuration d'un identifiant d'un dispositif d'accès de test, comprenant:
la réception, par un dispositif de commande principal, d'une notification de changement de liaison indiquant un nouveau dispositif depuis le dispositif d'accès de test ;
la génération, par le dispositif de commande principal dans un système d'accès de test, d'une commande de configuration d'identifiant portant un premier identifiant de dispositif, le premier identifiant de dispositif étant utilisé pour déterminer un identifiant de dispositif du dispositif d'accès de test par le dispositif d'accès de test ;
l'envoi de la commande de configuration d'identifiant au dispositif d'accès de test dans le système d'accès de test.

7. Dispositif d'accès de test, comprenant:
un port monté en cascade de liaison montante (510), adapté pour communiquer avec un dispositif de niveau supérieur, recevoir une commande de configuration d'identifiant envoyée par le dispositif de niveau supérieur ;
une unité d'obtention d'identifiant (520), adaptée pour obtenir un premier identifiant de dispositif porté dans la commande de configuration d'identifiant ; et
une unité de configuration d'identifiant (530), adaptée pour obtenir et mémoriser un identifiant de dispositif du dispositif d'accès de test en fonction du premier identifiant de dispositif ;
une unité de jugement (640), adaptée pour juger si un dispositif d'accès de test de niveau inférieur existe ou non, et produire en sortie une instruction de commande de détermination d'identifiant si un dispositif d'accès de test de niveau inférieur existe ;
une unité de détermination d'identifiant (650), adaptée pour déterminer le second identifiant de dispositif à envoyer au dispositif d'accès de test de niveau inférieur après la réception de l'instruction de commande de détermination d'identifiant ; et
un port monté en cascade de liaison descendante (660), adapté pour communiquer avec le dispositif d'accès de test de niveau inférieur, la communication comprenant l'envoi d'une commande de configuration d'identifiant au dispositif d'accès de test de niveau inférieur, et la commande de configuration d'identifiant portant le second identifiant de dispositif déterminé par l'unité de détermination d'identifiant.

8. Dispositif d'accès de test selon la revendication 7, dans lequel :
la communication entre le port monté en cascade de liaison descendante (660) et le dispositif d'accès de test de niveau inférieur comprend en outre : la réception d'informations envoyées par le dispositif d'accès de test de niveau inférieur ; et
l'unité de jugement (640) est adaptée en outre pour juger si le port monté en cascade de liaison descendante reçoit ou non les informations prévues, déterminer que le dispositif d'accès de test de niveau inférieur existe si le port monté en cascade de liaison descendante reçoit les informations prévues, ou déterminer qu'aucun dispositif d'accès de test de niveau inférieur existe si le port monté en cascade de liaison descendante ne reçoit pas les informations prévues.

9. Dispositif de commande principal, comprenant :
une unité de génération de commande de configuration d'identifiant (710) adaptée pour générer une commande de configuration d'identifiant qui achemine un identifiant de dispositif ; et
un port monté en cascade de liaison descendante (720), adapté pour communiquer avec un dispositif d'accès de test de niveau inférieur, dans lequel la communication comprend l'envoi de la commande de configuration d'identifiant au dispositif d'accès de test de niveau inférieur, et la réception d'une notification de changement de liaison envoyée par le dispositif d'accès de test de niveau inférieur.

10. Système d'accès de test, comprenant un dispositif de commande principal et au moins un dispositif d'accès de test monté en réseau en un mode en cascade, dans lequel :
le dispositif de commande principal est adapté pour communiquer avec un dispositif d'accès de test, la communication comprenant l'envoi d'une commande de configuration d'identifiant qui achemine un identifiant de dispositif au dispositif d'accès de test ; et
le dispositif d'accès de test est adapté pour recevoir la commande de configuration d'identifiant envoyée par le dispositif de niveau supérieur, obtenir le premier identifiant de dispositif acheminé dans la commande de configuration d'identifiant, obtenir et mémoriser un identifiant de dispositif du dispositif d'accès de test en fonction du premier identifiant de dispositif, juger si un dispositif d'accès de test de niveau inférieur existe ou non, obtenir un second identifiant de dispositif à envoyer au dispositif d'accès de test de niveau inférieur si un dispositif d'accès de test de niveau inférieur existe, et envoyer une commande de configuration d'identifiant qui achemine le second identifiant de dispositif au dispositif d'accès de test de niveau inférieur.

11. Support de mémorisation lisible par ordinateur, dans lequel:
le support de mémorisation lisible par ordinateur mémorise des codes de programme informatique qui, lorsqu'ils sont exécutés par un ordinateur, exécute toutes les étapes du procédé selon l'une quelconque des revendications 1 à 6.
